(19) Europäisches Patentamt
European Patent Office
Office européen des brevets

(11) Publication number: **0 328 788 A1**

(12) # EUROPEAN PATENT APPLICATION

(21) Application number: 88200274.4

(22) Date of filing: 15.02.88

(51) Int. Cl.4: C08L 53/02 , C08K 5/00 , C09J 3/14 , //(C08K5/00,5:13, 5:34,5:39)

(43) Date of publication of application: 23.08.89 Bulletin 89/34

(84) Designated Contracting States: ES

(71) Applicant: SHELL INTERNATIONALE RESEARCH MAATSCHAPPIJ B.V.
Carel van Bylandtlaan 30
NL-2596 HR Den Haag(NL)

(72) Inventor: Sakagami, Toshinori
11-24, 2-chome
Tsukiji, Chuo-ku Tokyo(JP)
Inventor: Nagano, Masanobu
11-24, 2-chome
Tsukiji, Chuo-ku Tokyo(JP)
Inventor: Ito, Hisaharu
11-24, 2-chome
Tsukiji, Chuo-ku Tokyo(JP)
Inventor: Miyachi, Takumi
11-24, 2-chome
Tsukiji, Chuo-ku Tokyo(JP)

(74) Representative: Aalbers, Onno et al
P.O. Box 302
NL-2501 CH The Hague(NL)

(54) **Block copolymer composition and process for the preparation thereof.**

(57) A composition comprising 100 parts by weight (pbw) of an aromatic vinyl compound-conjugated diene block copolymer and 1.0-5.0 pbw of a mixture of two or more compounds chosen from a dithiocarbamate derivative, a triazine derivative and a polyphenol compound, an adhesive composition containing it and a process for the preparation of said compositions by mixing the components in question.

EP 0 328 788 A1

# BLOCK COPOLYMER COMPOSITION AND PROCESS FOR THE PREPARATION THEREOF

The invention relates to a block copolymer composition comprising an aromatic vinyl compound-conjugated diene block copolymer, to a process for the preparation thereof, to an adhesive composition containing said block copolymer composition and to a process for the preparation of said adhesive composition.

Aromatic vinyl compound-conjugated diene block copolymers (hereinafter to be referred to as "block copolymer") are widely used in foot wear and industrial articles. For instance, styrene-isoprene block copolymers (hereinafter to be referred to as SIS) closely resemble polyisoprene and natural rubber and since they have hot melt properties which polyisoprene and natural rubber do not have, they are often used as non-solvent hot melt adhesives.

In addition to SIS, tackifying resins, such as petroleum resins, and softeners, such as naphthenic oil, are blended with heating in a mixer, such as a vessel mixer or a sealed kneader, to prepare hot melt adhesives, and the adhesives obtained can be applied with heating to a substrate (for instance kraft paper) to form adhesive tape for wrapping purposes, by using for instance a die coater or a hot melt gun to apply the adhesive to paper diapers.

As the mixing and application of such hot melt adhesives is done with addition of heat, stability to heat and oxygen is required and to this end age resistors have thus far been added. A generally used age resistor is zinc di-n-butyl-dithiocarbamate (hereinafter to be referred to as BZ), but it is not sufficient only to add BZ, for the melt viscosity of the adhesive goes down during hot melt and application, so that the adhesive properties of the end product, for instance adhesive tape, will decrease.

The inventors have carried out an investigation into the above problems, which has led to the present invention, in which a mixture of two or more compounds chosen from a dithiocarbamate derivative, a triazine derivative and a polyphenol compound is blended with the block copolymer to prepare a block copolymer composition having excellent stability to heat and oxygen.

Thus, the present invention provides a block copolymer composition comprising 100 parts by weight of an aromatic vinyl compound-conjugated diene block copolymer and in the range of from 1.0 to 5.0 parts by weight of a mixture of two or more compounds chosen from

(A) a dithiocarbamate derivative represented by the general formula I

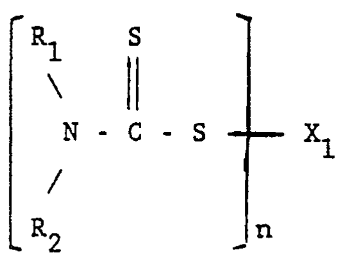

(I)

wherein $R_1$ and $R_2$ each represent an alkyl group containing in the range of from 1 to 8 carbon atoms, a phenyl group or a benzyl group and $X_1$ represents a Na, K, Zn, Te, Cu, Fe or Bi atom, and n is an integer in the range of from 1 to 3, depending on the valence of $X_1$,

(B) a triazine derivative represented by the general formula (II)

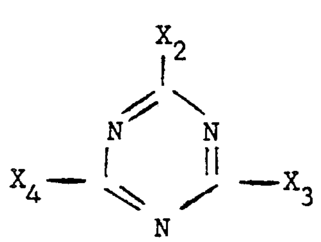

(II)

wherein $X_2$, $X_3$ and $X_4$, each represent a nitrogen, oxygen or sulphur atom bonded directly to the triazine ring, and, when representing nitrogen, connected to a member selected from a hydrogen atom, an alkyl group containing in the range of from 1 to 8 carbon atoms, an alkylene group containing in the range of

from 4 to 8 carbon atoms and an alkyl-substituted phenol group, and when representing oxygen or sulphur, connected to a member selected from a hydrogen atom an alkyl group containing in the range of from 1 to 8 carbon atoms, and

(C) a polyphenol compound represented by the general formula (III),

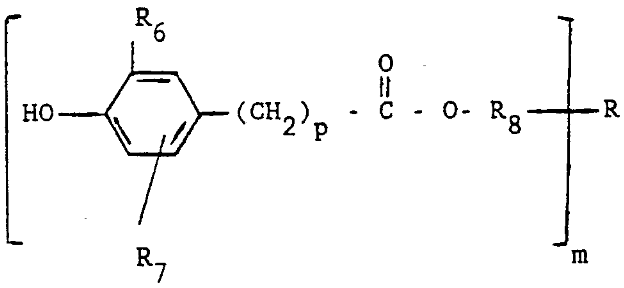 (III)

wherein R represents a hydrocarbon residue containing in the range of from 1 to 6 carbon atoms, $R_6$ an aryl group or an alkyl group containing in the range of from 1 to 8 carbon atoms, $R_7$ a hydrogen atom, an aryl group or an alkyl group containing in the range of from 1 to 8 carbon atoms and $R_8$ an alkylene group having in the range of from 1 to 10 carbon atoms and p is 0 or an integer in the range of from 1 to 8 and m an integer in the range of from 2 to 4.

The invention also provides a process for the preparation of a block copolymer composition according to the present invention which process comprises mixing

(a) 100 parts by weight of an aromatic vinyl compound-conjugated diene block copolymer, and

(b) in the range of from 1.0 to 5.0 parts by weight of a mixture of two or more compounds chosen from the compounds of the general formulae I, II and III.

The invention further provides an adhesive composition which contains:-

(a) a block copolymer composition according to the present invention,

(b) in the range of from 20 to 300 parts by weight of a tackifying resin, and

(c) in the range of from 0 to 200 parts by weight of a softener,

said parts by weight being calculated on 100 parts by weight of the block copolymer.

The invention, furthermore, provides a process for the preparation of an adhesive composition according to the present invention which process comprises mixing

(a) 100 parts by weight of an aromatic vinyl compound-conjugated diene block copolymer,

(b) in the range of from 1.0 to 5.0 parts by weight of a mixture of two or more compounds chosen from the compounds of the general formulae I, II and III,

(c) in the range of from 20 to 300 parts by weight of a tackyfying resin, and

(d) in the range of from 0 to 200 pars by weight of a softener.

The adhesive composition according to the present invention has an excellent stability to heat and oxygen and has excellent adhesive properties. The melt viscosity of the adhesive composition goes down during hot melt and application to an insignificant extent only.

The block copolymers used in the compositions of the present invention may be block copolymers of an aromatic vinyl compound and a conjugated diene, which are represented by the general formula

$(A\text{-}B)_n$, $(A\text{-}B)_nA$ or $(A\text{-}B)_nX$,

wherein A represents the polymer block of the aromatic vinyl compound, B the conjugated diene polymer block and X a coupling agent residue and n is an integer of at least 1.

Suitable aromatic vinyl compounds are styrene, α-methylstyrene, p-methylstyrene, m-methylstyrene, o-methylstyrene, p-tert-butylstyrene, the three dimethylstyrenes, 1- or 2-vinylnaphthalene; styrene is preferred.

Suitable conjugated diene compounds are butadiene, isoprene, piperylene, of which butadiene and isoprene are preferred, isoprene being particularly preferred.

Suitable coupling agents are polyhalides, such as dibromoethane and silicontetrachloride and such compounds as polyesters, polyepoxides, polyvinyl aromatic compounds and polyketones.

The aromatic vinyl compound is suitably present in the block copolymer in a content in the range of from 5 to 90% by weight, preferably 5 to 45% by weight and in particular 10 to 40% by weight, calculated on block copolymer. The number average molecular weight of the block copolymer is suitably in the range

of from 5,000 to 500,000 preferably 10,000 to 400,000.

In the dithiocarbamate derivative (A) of the formula (I) used for the composition according to the present invention, n is preferably 1 or 2, suitable examples being sodium dimethyl-dithiocarbamate, sodium diethyl-dithiocarbamate, sodium di-n-butyl-dithiocarbamate, potassium dimethyl-dithiocarbamate, potassium di-n-butyl-dithiocarbamate, zinc dimethyl-dithiocarbamate, zinc diethyl-dithiocarbamate, zinc dibenzyl-dithiocarbamate, zinc ethylphenyl-dithiocarbamate, selenium dimethyl-dithiocarbamate, tellurium diethyl-dithiocarbamate, iron dimethyl-dithiocarbamate, bismuth dimethyl-dithiocarbamate. Of these dithiocarbamates, zinc di-n-butyl-dithiocarbamate is preferred.

Examples of the triazine derivative (B) represented hereinbefore by formula (II) are 6-(4-hydroxy-3,5-di-tert-butylanilino)-2,4-bis-octyl-thio-1,3,5-triazine (hereinafter to be referred to as HATT), 6-(4-hydroxy-3,5-dimethylanilino)-2,4-bis-octyl-thiol-1,3,5-triazine, 6-(4-hydroxy-3-methyl-5-tert-butylanilino)-2,4-bis-octyl-thio-1,3,5-triazine, 2,4-bis-octyl-thio-6-(3,5-di-tert-butyl-4-hydroxyanilino)-1,3,5-triazine, 2-octyl-thio-4,6-bis-(3,5-di-tert-butyl-4-oxyanilino)-1,3,5-triazine, 4-amino-6-phenyl-1,3,5-triazine-2-ol.

Of these triazine derivatives, HATT is preferred.

In the preferred polyphenol compounds (C) represented by the afore-mentioned formula (III), m is suitably 3 or 4, R represents a hydrocarbon residue containing in the range of from 1 to 4, in particular 1 or 2 carbon atoms, $R_6$ represents an alkyl group containing in the range of from 1 to 8 carbon atoms, $R_7$ represents a hydrogen atom or an alkyl group containing in the range of from 1 to 8 carbon atoms and $R_8$ an alkylene group having in the range of from 1 to 5 carbon atoms.

A suitable example is tetrakis-[methylene-3-(3′,5′-di-tert-butyl-4′-hydroxyphenyl)propionate]methane.

In the compositions according to the present invention, a mixture of at least two of the compounds (A), (B), and (C) is used, but when a mixture of two compounds is used, their weight ratios ((A)/(B), (A)/(C), (B)-(C)) are 20-80/80-20%, preferably 30-70/70-30%. When a mixture of three compounds is used, the weight ratio ((A)/(B)/(C)) is 0.5-80/80-0.5/0.5-80%, preferably 0.5-60/60-0.5/0.5-60%, a weight ratio of 1-60/60-1/1-60% being preferred; the sum of the three percentages being 100.

Preferred combinations of (A), (B) and (C) are (A)/(C), (B)/(C) and (A)/(B)/(C), (A)/(B)/(C) being particularly preferred.

Thus, dithiocarbamate derivatives (A), triazine derivatives (B) or polyphenyl compounds (C) when used alone give poor stability, but when they are used as mixtures of the afore-mentioned ratios, their effects are seen to reinforce each other remarkably.

The combined amount in which the dithiocarbamate derivative (A) and/or the triazine derivative (B) and/or the polyphenol compound (C) used in the present invention are added, is of from 1.0 to 5.0 parts by weight (pbw), preferably of from 1.5 to 4.0 calculated on 100 pbw of block copolymer. Less than 1.0 pbw gives poor stability and more than 5.0 pbw will have no further influence on the stability results.

When the compositions of the present invention are used in adhesives, the tackifying resins used may be rosins, polyterpene resins, synthetic polyterpene resins, alicyclic hydrocarbon resins, cumarone resins, phenolic resins, terpene-phenol resins, aromatic hydrocarbon resins, aliphatic hydrocarbon resins. Of these, rosins, polyterpene resins and alicyclic hydrocarbon resins are preferred. These tackifiers may be used singly or as a mixture of two or more.

The amount of tackifier added is 20-300 pbw, preferably 30-200 pbw, calculated on 100 pbw of block copolymer. When tackifiers are added in amounts lying outside this range, the adhesive properties will be poor.

Up to 200 pbw of softener on 100 pbw of block copolymer may also be blended into the compositions of the present invention. For these softeners may be used naphthenic, paraffinic or aromatic process oils which may be used singly or in mixtures of two or more.

In addition to the afore-mentioned ingredient, the compositions of the present invention may include ultraviolet absorption stabilizers, inorganic fillers, such as calcium carbonate, talc, clay, titanium oxide, silica, magnesium carbonate and carbon black and colouring agents, if desired,

The compositions of the present invention may be prepared by mixing the above ingredients with heating in a conventional vessel mixer, or a sealed kneader, if required in a nitrogen atmosphere.

The compositions according to the present invention have excellent stability to heat and oxygen; the best economical results are obtained therefore - for instance in the case of the above-mentioned adhesives - when the mixture obtained by heat dissolution of the ingredients is directly applied to form a tacky layer. However, the mixing and application may also be carried out with the aid of a normal solvent or by emulsification.

Since the adhesive compositions in which the compositions according to the present invention are used, are applied to a substrate to form adhesive layers, they can effectively be used for all sorts of adhesive tape, labels, all sorts of fixing glues for light weight plastic mould goods, fixing glues for carpets, as well as

for adhesive tape and adhesive layers for labels for cold storage foods or for use in cold districts.

On account of the compositions according to the present invention a stabilized product can be prepared, leading to end products - for instance adhesive tape - which will not lose their tacky properties and whose useful industrial value is therefore extremely high.

The invention will be further illustrated by the following Examples. The Examples are according to the invention, the Comparative Experiments are not.

EXAMPLES 1-9 and COMPARATIVE EXPERIMENTS A-P

1) 100 parts by weight (pbw) of SIS (styrene content 15% by weight, number average molecular weight 160,000), 100 pbw of aliphatic petroleum resin (ex Exxon, trade mark Eskorett 1310), 40 pbw of a naphthenic process oil trade mark Diana process oil NM280) and 2.4 pbw of a stabilizing agent made up of 30% by weight of zinc di-n-butyl-dithiocarbamate and 70% by weight of 6-(4-hydroxy-3,5-di-tert-butylanilino)-2,4-bis-octylthio-1,3,5-triazine were dissolved in toluene (concentration 25% by weight) and after the mixture was stirred to uniformity, the toluene was removed by vacuum drying to give the sample of Example 1.

The samples for Examples 2-9 and Comparative Experiments A-P were prepared in the same way by using the stabilizing agents listed in Table 1.

2) Stability test

The adhesives prepared by the above method were tested in a rotating viscometer (HAAKE Rotovisco RV12); at a sliding rate of below 400 $sec^{-1}$ at 180 °C they were subjected to 30 minutes' continuous rotation to determine the changes with time in the melt viscosities of the adhesives (melt viscosities determined immediately after 4 minutes' heat removal from the samples (after 0 min) and after 30 minutes). The results are given in Table 1.

TABLE 1

| | Stabilizer | Weight ratio (%w) | Melt viscosity after 0 min (P) | Melt viscosity after 30 min (P) |
|---|---|---|---|---|
| **Examples** | | | | |
| 1 | *1 Stabilizer A/*2 Stabilizer B | 30/70 | 298 | 182 |
| 2 | ditto | 50/50 | 296 | 193 |
| 3 | ditto | 70/30 | 295 | 188 |
| 4 | Stabilizer A/*3 Stabilizer C | 30/70 | 296 | 213 |
| 5 | ditto | 50/50 | 298 | 222 |
| 6 | ditto | 70/30 | 296 | 219 |
| 7 | Stabilizer B/Stabilizer C | 30/70 | 295 | 226 |
| 8 | ditto | 50/50 | 296 | 234 |
| 9 | ditto | 70/30 | 295 | 218 |
| **Comp. Exp.** | | | | |
| A | Stabilizer A | 100 | 295 | 113 |
| B | Stabilizer B | 100 | 295 | 106 |
| C | Stabilizer C | 100 | 289 | 105 |
| D | Stabilizer A/*4 Stabilizer D | 50/50 | 298 | 111 |
| E | Stabilizer A/*5 Stabilizer E | 50/50 | 294 | 83 |
| F | Stabilizer B/Stabilizer D | 50/50 | 298 | 102 |

TABLE 1 (cont'd)

| Comp. Exp. | Stabilizer | Weight ratio (%w) | Melt viscosity after 0 min (P) | Melt viscosity after 30 min (P) |
|---|---|---|---|---|
| G | Stabilizer B/Stabilizer E | 50/50 | 298 | 112 |
| H | Stabilizer C/Stabilizer D | 50/50 | 296 | 93 |
| I | Stabilizer C/Stabilizer E | 50/50 | 295 | 89 |
| J | Stabilizer D/Stabilizer E | 50/50 | 297 | 76 |
| K | Stabilizer A/Stabilizer B | 10/90 | 296 | 108 |
| L | ditto | 90/10 | 295 | 113 |
| M | Stabilizer A/Stabilizer C | 10/90 | 295 | 106 |
| N | ditto | 90/10 | 297 | 106 |
| O | Stabilizer B/Stabilizer C | 10/90 | 293 | 108 |
| P | ditto | 90/10 | 294 | 106 |

*1: zinc di-n-butyl-dithiocarbamate

*2: 6-(4-hydroxy-3,5-di-tert-butylanilino)2,4-bis-octylthio-1,3,5-triazine

*3: tetrakis-[methylene-3-(3',5'-di-tert-butyl-4'-hydroxyphenyl)propionate]methane

*4: 4,4'-butylydenebis(6-tert-butyl-3-methylphenol)

*5: distearylthiodipropionate

It is seen from Table 1 that the effects which mixtures of dithiocarbamate derivative/triazine derivative, dithiocarbamate derivative/polyphenol compound or triazine derivative/polyphenol compound have on stability are higher than when any one of these compounds is added singly, and that the effects on stability are also higher than when use is made of one of these stabilizing agents together with another stabilizer or a combination of other stabilizers. Further it is seen that a mixing ratio (dithiocarbamate derivative/triazine derivative, dithiocarbamate derivative/polyphenol compound, triazine derivative/polyphenol compound) in the vicinity of 30-70/70-30 affords superior stabilizing effects.

EXAMPLES 10-22 and COMPARATIVE EXPERIMENTS Q-V

19 Samples (Examples 10-22 and Comparative Experiments Q-V) were prepared in the same way as the samples for the Examples mentioned hereinbefore, by varying the amounts added of dithiocarbamate derivative/triazine derivative, dithiocarbamate derivative/polyphenol compound, triazine derivative/polyphenol compound and dithiocarbamate derivative/triazine derivative/polyphenol compound as shown in Table 2. These samples were subjected to stabilization tests. The results are listed in Table 2.

It is seen from Table 2 that when 1.0-5.0 pbw of dithiocarbamate derivative/triazine derivative, dithiocarbamate derivative/polyphenol compound, triazine derivative/polyphenol compound and dithiocarbamate derivative/triazine derivative/polyphenol compound is added on 100 pbw of block copolymer, the effects on stability are excellent.

TABLE 2

| Examples | Stabilizer | Weight ratio (%w) | Amount added (pbw) | Melt viscosity after 0 min (P) | Melt viscosity after 30 min (P) |
|---|---|---|---|---|---|
| 10 | Stabilizer A/Stabilizer B | 50/50 | 1.0 | 295 | 178 |
| 11 | ditto | 50/50 | 2.4 | 296 | 193 |
| 12 | ditto | 50/50 | 5.0 | 298 | 196 |
| 13 | Stabilizer A/Stabilizer C | 50/50 | 1.0 | 297 | 211 |
| 14 | ditto | 50/50 | 2.4 | 298 | 222 |
| 15 | ditto | 50/50 | 5.0 | 295 | 236 |
| 16 | Stabilizer B/Stabilizer C | 50/50 | 1.0 | 297 | 226 |
| 17 | ditto | 50/50 | 2.4 | 296 | 234 |
| 18 | ditto | 50/50 | 5.0 | 294 | 238 |
| 19 | Stabilizer A/Stabilizer B/Stabilizer C | 60/20/20 | 2.4 | 296 | 236 |
| 20 | ditto | 20/60/20 | " | 296 | 243 |
| 21 | ditto | 20/20/60 | " | 297 | 248 |
| 22 | ditto | 40/30/30 | " | 298 | 246 |

TABLE 2 (cont'd)

| Comp. Exp. | Stabilizer | Weight ratio (%w) | Amount added (pbw) | Melt viscosity after 0 min (P) | Melt viscosity after 30 min (P) |
|---|---|---|---|---|---|
| Q | Stabilizer A/Stabilizer B | 50/50 | 0.5 | 294 | 62 |
| R | ditto | 50/50 | 6.0 | 296 | 218 |
| S | Stabilizer A/Stabilizer C | 50/50 | 0.5 | 296 | 59 |
| T | ditto | 50/50 | 6.0 | 295 | 210 |
| U | Stabilizer B/Stabilizer C | 50/50 | 0.5 | 293 | 64 |
| V | ditto | 50/50 | 6.0 | 297 | 215 |

## Practical uses

The adhesive compositions obtained by the method described hereinbefore were applied to polyester films in layers of 35 ± 5 µ thickness and their bonding strengths (after 0 min) were established by the method described further hereinafter. Furthermore, the adhesives were placed for 16 hours in a Geer oven at 180 °C and then dissolved in toluene and applied to polyester films in layers of 35 ± 5 µ thickness; their bonding strengths (after 16 hours) were established in the same way. The results are listed in Table 3.

Bonding strength: JIS-Z-1524

The adhesive tape samples were cut into 15 mm wide strips and stuck to SUS 304 sheets over a fixed area of 15 mm x 25 mm; a load of 1.2 kg was suspended from one end of the tape and the time it took for the glued area to peel and fall off was determined. The surrounding temperature was kept at 40 °C.

TABLE 3

| Adhesive | Bonding strength (min) | |
|---|---|---|
| | Before Deterioration through heat (after 0 min) | After Deterioration through heat (after 16 h) |
| Example 2 | 298 | 112 |
| " 5 | 298 | 158 |
| " 8 | 298 | 178 |
| Comp. Exp. A | 298 | 43 |

**Claims**

1. A block block copolymer composition comprising 100 parts by weight of an aromatic vinyl compound-conjugated diene block copolymer and in the range of from 1.0 to 5.0 parts by weight of a mixture of two or more compounds chosen from

(A) a dithiocarbamate derivative represented by the general formula (I)

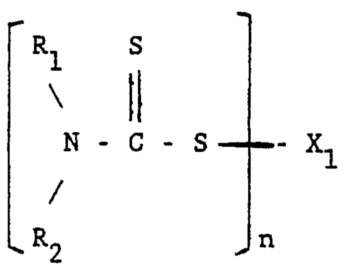

(I)

wherein $R_1$ and $R_2$ each represent an alkyl group containing in the range of from 1 to 8 carbon atoms, a phenol group or a benzyl group and $X_1$ represents a Na, K, Zn, Te, Cu, Fe or Bi atom, and n is an integer in the range of from 1 to 3, depending on the valence of $X_1$,

(B) a triazine derivative represented by the general formula (II)

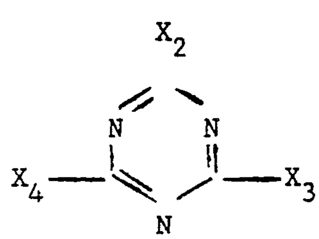

(II)

wherein $X_2$, $X_3$ and $X_4$ each represent a nitrogen, oxygen or sulphur atom bonded directly to the triazine ring, and when representing nitrogen connected to a member selected from a hydrogen atom, an alkyl group containing in the range of from 1 to 8 carbon atoms, an alkylene group containing in the range of from 4 to 8 carbon atoms or an alkyl-substituted phenol group, and when representing oxygen or sulphur, connected to a member selected from a hydrogen atom and an alkyl group containing in the range of from

4 to 8 carbon atoms, and

(C) a polyphenol compound represented by the general formula (III)

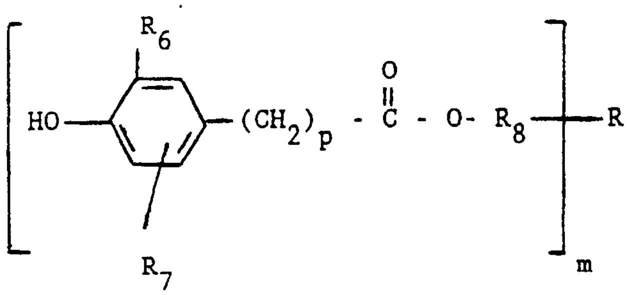

(III)

wherein R represents a hydrocarbon residue containing in the range of from 1 to 6 carbon atoms, $R_6$ an aryl group or an alkyl group containing in the range of from 1 to 8 carbon atoms, $R_7$ a hydrogen atom, an aryl group or an alkyl group containing in the range of from 1 to 8 carbon atoms and $R_8$ an alkylene group having in the range of from 1 to 10 carbon atoms and p is 0 or an integer in the range of from 1 to 8 and m an integer in the range of from 2 to 4.

2. A block copolymer composition as claimed in claim 1 in which the block copolymer is represented by the general formula
$(A\text{-}B)_n$, $(A\text{-}B)_nA$ or $(A\text{-}B)_nX$,
wherein A represents the polymer block of the aromatic vinyl compound, B the conjugated diene polymer block and X a coupling agent residue and n is an integer of at least 1.

3. A block copolymer composition as claimed in claim 1 or 2 in which the aromatic vinyl compound is styrene.

4. A block copolymer composition as claimed in any one of the preceding claims in which the conjugated diene is isoprene.

5. A block copolymer composition as claimed in any one of the preceding claims in which the aromatic vinyl compound is present in the block copolymer in a content in the range of from 5 to 45% by weight, calculated on block copolymer.

6. A block copolymer composition as claimed in any one of the preceding claims in which the block copolymer has a number average molecular weight in the range of from 10,000 to 400,000.

7. A block copolymer composition as claimed in any one of the preceding claims in which n in the general formula I is 1 or 2.

8. A block copolymer composition as claimed in claim 7 in which the compound of the general formula I is zinc di-n-butyl-dithiocarbamate.

9. A block copolymer composition as claimed in any one of claims 1 to 6 in which the compound of the general formula II is 6-(4 hydroxy-3,5-di-tert-butylanilino)-2,4-bis-octyl-thio-1,3,5-triazine.

10. A block copolymer composition as claimed in any one of claims 1 to 6 in which in the compound of the general formula III m is 3 or 4, R represents a hydrocarbon residue containing in the range of from 1 to 4 carbon atoms, $R_6$ represents an alkyl group containing in the range of from 1 to 8 carbon atoms, $R_7$ represents a hydrogen arom or an alkyl group containing in the range of from 1 to 8 carbon atoms and $R_8$ an alkylene group having in the range of from 1 to 5 carbon atoms.

11. A block copolymer composition as claimed in claim 10 in which the compound of the general formula III is tetrakis-[methylene-3-(3′,5′-di-tert-butyl-4′-hydroxyphenyl)propionate]methane.

12. A block copolymer composition as claimed in any one of the preceding claims in which a weight ratio A to B, A to C or B to C in the range of from 20-80% to 80-20% is used, the sum of the two percentages being 100.

13. A block copolymer composition as claimed in any one of claims 1 to 11 in which a weight ratio A to B to C in the range of from 0.5-80 to 80-0.5 to 0.5-80 is used, the sum of the three percentages being 100.

14. An adhesive composition which contains

(a) a block copolymer composition as claimed in any one of the preceding claims,

(b) in the range of from 20 to 300 parts by weight of a tackifying resin, and

(c) in the range of from 0 to 200 parts by weight of a softener,

said parts by weight being calculated on 100 parts by weight of the block copolymer.

15. An article whenever containing an adhesive composition as claimed in claim 14.

16. A process for the preparation of an adhesive composition as claimed in claim 14 which process comprises mixing

(a) 100 parts by weight of an aromatic vinyl compound - conjugated diene block copolymer,

(b) in the range of from 1.0 to 5.0 parts by weight of a mixture of two or more compounds chosen from the compounds of the general formulae I, II and III in claim 1,

(c) in the range of from 20 to 300 parts by weight of a tackifying resin, and

(d) in the range of from 0 to 200 parts by weight of a softener.

17. A process for the preparation of a block copolymer composition as claimed in any one of claims 1 to 13 which process comprises mixing

(a) 100 parts by weight of an aromatic vinyl compound-conjugated diene block copolymer, and

(b) in the range of from 1.0 to 5.0 parts by weight of a mixture of two or more compounds chosen from the compounds of the general formulae I, II and III in claim 1.

European Patent Office

# EUROPEAN SEARCH REPORT

Application Number

EP 88 20 0274

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 399 249 (BILDUSAS) * Claim 1; example 5 * | 1-4,7-8,10-12,14,15 | C 08 L 53/02<br>C 08 K 5/00<br>C 09 J 3/14 //<br>(C 08 K 5/00<br>C 08 K 5:13<br>C 08 K 5:34<br>C 08 K 5:39 ) |
| X | IRVING SKEIST: "Handbook of adhesives", second edition, 1982, Van Nostrand Reinhold Co., New York, US; pages 304-330, chapter 19, J.T. HARLAN et al.: "Thermoplastic rubber (A-B-A-block copolymers) in adhesives" * Page 306, left-hand column, lines 7-14; page 318, right-hand column, lines 20-25,35-42; table 6; page 320, right-hand column, line 10 - page 321, right hand column * | 1-12,14-16 | |

TECHNICAL FIELDS SEARCHED (Int. Cl.4)

C 08 K
C 08 L
C 09 J

The present search report has been drawn up for all claims

| Place of search | Date of completion of the search | Examiner |
|---|---|---|
| THE HAGUE | 04-10-1988 | SCHUELER D.H.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)